# EUROPÄISCHE PATENTSCHRIFT

(11) **EP 2 527 201 B1**
(45) Veröffentlichungstag und Bekanntmachung des Hinweises auf die Patenterteilung: **20.11.2013**
(21) Anmeldenummer: 11004293.4
(22) Anmeldetag: 25.05.2011
(51) Int. Cl.: B60R 7/00

(54) **Verfahren zur stoffschlüssigen Befestigung eines textilien Flächengebildes**
Method for making a strong fixture of a textile sheet
Procédé de fixation par matériau interposé d'une structure textile plate

(43) Veröffentlichungstag der Anmeldung: 28.11.2012
(73) Patentinhaber: Perzi Kunststoff Ges.m.b.H., 6890 Lustenau (AT)
(72) Erfinder: Perzi, Reinhard, 6890 Lustenau (AT)
(74) Vertreter: Fechner, Thomas

(56) Entgegenhaltungen:
- DE-A1- 10 247 585
- DE-A1-102009 019 171
- DE-U1-202004 018 946
- KR-A- 20100 032 078
- KR-U-020080 003 398

## Beschreibung

Die vorliegende Erfindung betrifft ein Verfahren zur stoffschlüssigen Befestigung, insbesondere zum Ankleben, eines textilen Flächengebildes, insbesondere eines Netzes, an einem Rahmen, wobei der Rahmen in oder an einer Rahmenpositioniervorrichtung positioniert wird und anschließend das textile Flächengebilde über den in oder an der Rahmenpositioniervorrichtung positionierten Rahmen gespannt wird und anschließend das textile Flächengebilde mittels einer Andrückvorrichtung zumindest bereichsweise an den Rahmen angedrückt und anschließend das textile Flächengebilde am Rahmen stoffschlüssig befestigt, insbesondere angeklebt, wird.

Darüber hinaus betrifft die Erfindung auch eine Vorrichtung zur stoffschlüssigen Befestigung, insbesondere zum Ankleben, eines textilen Flächengebildes, insbesondere eines Netzes, an einen Rahmen.

Rahmen mit daran befestigten textilen Flächengebilden und insbesondere Netzen werden z.B. in der Autoindustrie als sogenannte Gepäcknetze im Innenraum des Fahrzeugs verbaut. Die Rahmen spannen das textile Flächengebilde bzw. das Netz auf und dienen der Befestigung an einer entsprechenden Innenwand des Fahrzeugs. Natürlich können solche Gepäcknetze auch anderweitig eingesetzt werden. Das stoffschlüssige Befestigen und insbesondere das Ankleben des Netzes am Rahmen ist z.B. aus der DE 102 47 585 A1 bekannt. Dort wird vorgeschlagen, das Gepäcknetz während der stoffschlüssigen Befestigung mittels Spannrahmen, Spannrolle, Nadelrolle, an einem Rahmen angebrachten Haken oder Greifern oder dergleichen über dem Rahmen aufzuspannen. Im Wesentlichen dieselbe Vorgehensweise ist etwas ausführlicher in der DE 10 2009 019 171 A1 beschrieben. Auch hier wird vorgeschlagen, das Netz zum Aufspannen über dem Rahmen an Haltestiften auf einem Anlageprofil durch Einfädeln zu befestigen.

Die in der DE 102 47 585 A1 und der DE 10 2009 019 171 A1 beschriebenen Haken bzw. Haltestifte zum Spannen des Netzes haben den Nachteil, dass das Netz aufwendig auf die Haken bzw. Haltestifte aufgefädelt werden muss. Darüber hinaus stellen die Haken bzw. Haltestifte eine Verletzungsgefahr für das Bedienpersonal, welches das Netz auffädeln soll, und auch die Gefahr einer Beschädigung des Netzes selbst dar.

Weiters haben die Haken und Haltestifte den Nachteil, dass sie nur für netzförmige textile Flächengebilde, bei denen entsprechende Netzmaschen zum Einhaken vorhanden sind, eingesetzt werden können.

Aufgabe der Erfindung ist es daher, eine Verbesserung vorzuschlagen, die die genannten Probleme beseitigt.

Gemäß der Erfindung ist vorgesehen, dass ein Verfahren der oben genannten Art dahingehend verbessert wird, dass das textile Flächengebilde beim über den Rahmen Spannen an zumindest einem Klettband befestigt wird.

Weiters sieht die Erfindung zur Lösung dieses Problems eine Vorrichtung zur stoffschlüssigen Befestigung, insbesondere zum Ankleben, eines textilen Flächengebildes, insbesondere eines Netzes, an einem Rahmen vor, wobei die Vorrichtung zumindest eine Rahmenpositioniervorrichtung zur Positionierung des Rahmens und zumindest eine Befestigungseinrichtung zum Befestigen des textilen Flächengebildes im gespannten Zustand über dem, in oder an der Rahmenpositioniervorrichtung positionierten Rahmen und zumindest eine Andrückvorrichtung zum Andrücken des textilen Flächengebildes an den Rahmen während des stoffschlüssigen Verbindens, vorzugsweise Anklebens, des textilen Flächengebildes am Rahmen aufweist, wobei die Befestigungseinrichtung zumindest ein Klettband zum Befestigen des textilen Flächengebildes im über den Rahmen gespannten Zustand aufweist.

Es hat sich überraschenderweise gezeigt, dass es ausreicht, das Netz beim Spannen über den Rahmen mittels Klettband zu befestigen. Geeignete Klettbänder sind beim Stand der Technik von entsprechenden Klettverschlüssen her bekannt. Sie haben den Vorteil, dass an ihnen nicht nur Netzmaschen aufweisende Netze, sondern auch andere textile Flächengebilde wie Gewebetücher und dergleichen befestigt werden können. Darüber hinaus stellen diese Klettbänder keine potentielle Verletzungsgefahr für das Bedienpersonal und/oder das textile Flächengebilde bzw. Netz dar. Das textile Flächengebilde bzw. Netz ist auch wesentlich schneller am Klettband befestigt, als dies bei gattungsgemäßen Haken oder Haltestiften der Fall ist, auf die ein Netz aufwändig aufgefädelt werden muss.

Der Vollständigkeit halber wird darauf hingewiesen, dass unter einem Klettband hier derjenige Teil eines an sich bekannten Klettverschlusses verstanden wird, welcher eine Vielzahl von, insbesondere dicht nebeneinander angeordneten, Widerhäkchen aufweist, welche dazu geeignet sind, in die Faserung eines textilen Flächengebildes einzugreifen, indem sie direkt an den bzw. einzelnen Fasern des Flächengebildes angreifen. Üblicherweise sind diese Widerhäkchen auf einem Trägerband fixiert und getragen. Der Träger der erfindungsgemäß einsetzbaren Klettbänder muss aber nicht zwangsläufig bandförmig ausgebildet sein. Der Begriff des Klettbandes wird im Wesentlichen im Einklang mit der allgemein üblichen Terminologie verwendet. Man könnte anstelle des Begriffs des Klettbandes auch von einer Klettoberfläche sprechen.

Die stoffschlüssige Befestigung des Netzes am Rahmen erfolgt bei erfindungsgemäßen Verfahren und Vorrichtungen günstigerweise mittels Ankleben. Es kann sich dabei um das Aufbringen durchgehender Kleberaupen aber auch um punktuelles oder streifenweises Kleben handeln. Genauso gut sind erfindungsgemäße Verfahren und Vorrichtungen aber auch dann einsetzbar, wenn das stoffschlüssige Befestigen mittels Anschweißen oder anderen an sich bekannten stoffschlüssigen Befestigungsarten erfolgt. Generell gesprochen kann die stoffschlüssige Befestigung punktförmig, streifenförmig und/oder flächig erfolgen.

Bevorzugt ist vorgesehen, dass das textile Flächengebilde während des Andrückens mittels der Andrückvorrichtung an den Rahmen und während des stoffschlüssigen Befestigens am Rahmen an dem Klettband bzw. den Klettbändern befestigt bleibt. Hierbei hat sich überraschenderweise herausgestellt, dass die Befestigung des textilen Flächengebildes am Klettband auch stark genug ist, dass sie beim Andrücken des textilen Flächengebildes an den Rahmen mittels Andrückvorrichtung das textile Flächengebilde ausreichend festhält.

Bevorzugte Varianten der Erfindung sehen vor, dass das Klettband bzw. die Klettbänder der Befestigungseinrichtung zumindest bereichsweise um die Rahmenpositioniervorrichtung herum angeordnet sind. Weiters ist es günstig, wenn die Klettbänder der Befestigungseinrichtung von der Rahmenpositioniervorrichtung beabstandet angeordnet sind. Beabstandet bedeutet dabei, dass ein Abstand grö-βer Null vorhanden ist. Im Sinne einer ausreichend starken Befestigung des textilen Flächengebildes am Klettband sehen besonders bevorzugte Varianten der Erfindung vor, dass das Klettband bzw. die Klettbänder der Befestigungseinrichtung von ihrer zur Rahmenpositioniervorrichtung gewandten Seite zu ihrer dazu gegenüberliegenden Seite schräg abfallend angeordnet sind. Bezugnehmend auf eine Aufspannebene, welche durch das auf den Rahmen aufgespannte und am Klettband befestigte textile Flächengebilde vorgegeben wird, ist das Klettband günstigerweise, vorzugsweise jeweils, um einen Winkel zwischen -15° und -45° abfallend angeordnet.

Im Sinne einer guten und dauerhaften stoffschlüssigen Befestigung ist es günstig, wenn die Andrückvorrichtung zumindest zwei voneinander beabstandete Andrückleisten aufweist und das textile Flächengebilde mittels der Andrückleisten an den Rahmen angedrückt wird und die stoffschlüssige Befestigung, vorzugsweise das Ankleben, des textilen Flächengebildes am Rahmen in einem Zwischenfreiraum zwischen den Andrückleisten durchgeführt wird. Durch die beiden Andrückleisten wird sichergestellt, dass das textile Flächengebilde, insbesondere in dem Bereich in dem die stoffschlüssige Verbindung, vorzugsweise das Ankleben, am Rahmen stattfindet, optimal an diesen angedrückt wird. Besonders bevorzugt ist dabei vorgesehen, dass ein vorzugsweise thermisches Abtrennen, vorzugsweise mittels Laserstrahl, von überstehenden Resten des textilen Flächengebildes vom, am Rahmen befestigten oder zu befestigenden Teil des textilen Flächengebildes in einem seitlichen Freiraum in der Andrückvorrichtung neben einer der Andrückleisten durchgeführt wird, wobei der seitliche Freiraum zumindest durch diese Andrückleiste vom Zwischenfreiraum getrennt ist. Dies ermöglicht es, dass die über den Rahmen überstehenden Reste des textilen Flächengebildes bereits zu einem Zeitpunkt entfernt werden können, zu dem die stoffschlüssige Verbindung, insbesondere die Verklebung, noch nicht vollständig ausgehärtet ist. Das Abtrennen kann auf verschiedene Arten und Weisen von statten gehen. Besonders bevorzugt sind wie gesagt thermische Trennverfahren, bei denen das textile Flächengebilde bzw. Netz, wenn es aus Kunststofffäden besteht oder diese aufweist, an seinen durch das Abtrennen entstehenden offenen Enden gleich mit verschweißt wird, sodass es nicht zu einem Ausfransen kommen kann.

Im Sinne eines optimalen Andrückens des Netzes an dem Rahmen, zumindest in dem Bereich, in dem die stoffschlüssige Verbindung hergestellt werden soll, ist es günstig, wenn die Andrückvorrichtung eine magnetische Verbindung und/oder eine, vorzugsweise mittels Spannhebel von Hand betätigbare, Spanneinrichtung zum Andrücken und/oder Befestigen der Andrückvorrichtung an der Rahmenpositioniervorrichtung oder einem, die Rahmenpositioniervorrichtung tragenden Träger aufweist.

Insbesondere für die Fälle, in denen der Rahmen nicht umfangsgeschlossen ausgebildet ist und das textile Flächengebilde entsprechend in einem Zwischenbereich nicht am Rahmen befestigt wird, ist günstigerweise vorgesehen, dass die Vorrichtung eine Randspanneinrichtung zum Spannen eines freien Randes, vorzugsweise eines dort angeordneten Bundes, des textilen Flächengebildes in diesem Zwischenbereich aufweist. Es kann sich bei der Randspanneinrichtung um zumindest eine, vorzugsweise in ihrer Klemmkraft einstellbare, Klemmfeder oder ebenfalls um zumindest ein Klettband handeln. Alternativ sind auch keilförmige Schrägflächen denkbar, welche z.B. auch an der Andrückvorrichtung angeordnet sein können und so beim Andrücken der Andrückvorrichtung an den Rahmen bzw. die Rahmenpositionierungsvorrichtung den Rand des textilen Flächengebildes im Zwischenbereich, insbesondere den dort angeordneten Bund, vorspannt.

Weitere Merkmale und Einzelheiten einer bevorzugten Ausführungsform der Erfindung ergeben sich aus der nachfolgenden Figurenbeschreibung. Es zeigen:
- Fig. 1: eine Ansicht von unten auf ein Beispiel eines an einem Rahmen bereits stoff-schlüssig befestigten textilen Flächengebildes in der Form eines Netzes;
- Fig. 2: ein erfindungsgemäßes Ausführungsbeispiel einer Vorrichtung;
- Fig. 3: eine Detailansicht im Bereich A aus Fig. 2;
- Fig. 4: eine Darstellung mit in die Rahmenpositioniervorrichtung gemäß Fig. 2 be-reits eingelegtem Rahmen;
- Fig. 5: die Situation nachdem ein textiles Flächengebilde in Form eines Netzes an den Klettbändern der Vorrichtung befestigt wurde;
- Fig. 6: eine Momentaufnahme beim Schließen der Andrückvorrichtung;
- Fig. 7: eine Detailansicht zur Klemmfeder und der Befestigung des Bundes des texti-len Flächengebildes an der Klemmfeder;
- Fig. 8: eine Alternative zu Fig. 7;
- Fig. 9: eine Darstellung zum Andrücken der Andrückvorrichtung an die Rahmenposi-tioniervorrichtung bzw. deren Träger mittels Spanneinrichtung;
- Fig. 10: einen Vertikalschnitt im Bereich der Rahmenpositioniervorrichtung, wobei die Andrückvorrichtung das textile Flächengebilde mittels Andrückleisten an den Rahmen andrückt;
- Fig. 11: eine Darstellung nach der Entnahme des Rahmens;
- Fig. 12: eine schematisierte Darstellung einer teilautomatisierten Vorgehensweise beim Durchführen des erfindungsgemäßen Verfahrens.

Bevor im Einzelnen auf die Figuren eingegangen wird, ist darauf hinzuweisen, dass in den gezeigten Abbildungen das textile Flächengebilde in Form eines Netzes 1 ausgebildet ist. Es wird im Folgenden daher explizit auch nur noch vom Netz 1 gesprochen. Dies bedeutet aber keine Beschränkung auf Netze an sich. Die gleiche Vorgehensweise ist auch mit anderen textilen Flächengebilden, welche nicht netzartig ausgebildet sind, möglich.

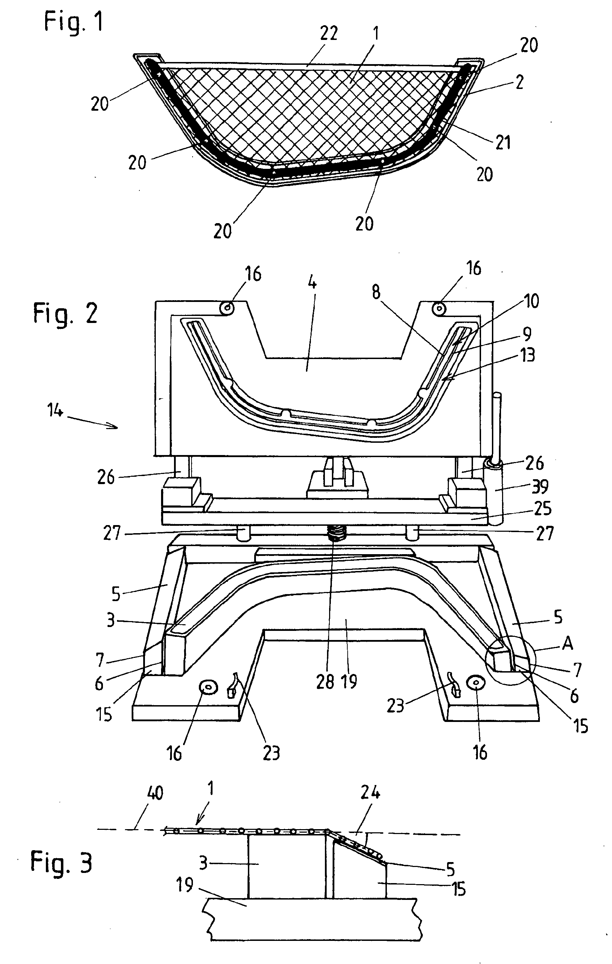

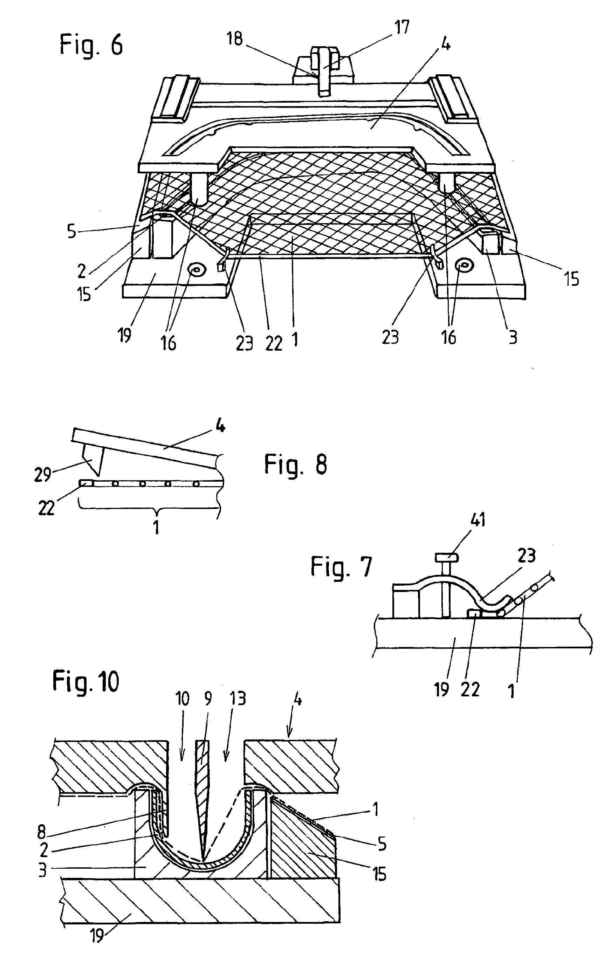

Fig. 1 zeigt eine Ansicht von unten auf ein Beispiel eines stoffschlüssig am Rahmen 2 befestigten Netzes 1. Die stoffschlüssige Befestigung erfolgt im gezeigten Ausführungsbeispiel mittels der Kleberaupe 21. In einem Zwischenbereich, in dem der Rahmen 2 nicht vorhanden ist, ist das Netz 1 an seinem Rand von einem Bund 22 begrenzt. Das Netz 1 wie auch andere textile Flächengebilde bestehen günstigerweise aus einem flexiblen bzw. elastischen Material. Fig. 1 zeigt die unbelastete, auf den Rahmen 2 aufgespannte Stellung des Netzes 1. Am Rahmen 2 sind zusätzlich noch Befestigungsmittel 20 angedeutet, mit denen der Rahmen 2 dann z.B. im Innenraum des Fahrzeugs befestigt werden kann. Es kann sich bei den Befestigungsmitteln z.B. um Löcher für Verschraubungen, Vernietungen oder dergleichen oder um Federköpfe einer Schnapp- bzw. Rastverbindung oder dergleichen handeln. Die Rahmen 2 können aus Kunststoff bestehen oder Kunststoff zumindest aufweisen. Besonders bevorzugt sind es Spritzgussteile. Natürlich können die Rahmen 2 auch aus anderen Materialien wie z.B. Metall, Holz, Keramik oder Verbundmaterialien bestehen. Die Rahmen 2 können, wie z.B. in Fig. 10 zu sehen, eine Vertiefung aufweisen, in der dann auch die stoffschlüssige Verbindung mit dem Netz 1 erfolgen kann.

Fig. 2 zeigt nun eine erfindungsgemäße Vorrichtung 14 mit der auch das erfindungsgemäße Verfahren durchgeführt werden kann.

Auf einem beispielsweise plattenförmig ausgeführten Träger 19 ist im gezeigten Ausführungsbeispiel die Rahmenpositioniervorrichtung 3 angeordnet bzw. fixiert, in die der Rahmen 2 eingelegt werden kann. Die Rahmenpositioniervorrichtung 3 dient dazu, den Rahmen 2 während der stoffschlüssigen Befestigung bzw. des Verklebens mit dem Netz 1 in der gewünschten bzw. benötigten Relativposition zum Netz 1 zu halten. Im gezeigten Ausführungsbeispiel hat die Rahmenpositioniervorrichtung 3 hierzu eine kanalförmige Ausnehmung, die exakt zur Form des Rahmens 2 passt. Natürlich gibt es auch andere Arten von geeigneten Rahmenpositioniervorrichtungen 3. Es kann sich z.B. um entsprechende Anschläge, Klemmvorrichtungen oder dergleichen handeln.

Zumindest bereichsweise um die Rahmenpositioniervorrichtung 3 herum, sind erfindungsgemäß die Klettbänder 5 zur Befestigung des Netzes 1 über dem in die Rahmenpositioniervorrichtung 3 eingelegten Rahmen 2 angeordnet. Sie sind Teil der Befestigungseinrichtung 15. Die Befestigungseinrichtung 15 bzw. die Klettbänder 5 können, wie hier gezeigt, günstigerweise ebenfalls am Träger 19 angeordnet bzw. fixiert sein. Das Gleiche gilt auch für die im Detail weiter unten noch geschilderten Klemmfedern 23, welche im gezeigten Ausführungsbeispiel zum Spannen des Bundes 22 und damit des Netzes 1 im rahmenfreien Zwischenbereich des freien Randes des Netzes 1 dienen.

Die Andrückvorrichtung 4, mit der das Netz 1 beim stoffschlüssigen Befestigen am Rahmen 2 an diesen angedrückt werden kann, ist im gezeigten Ausführungsbeispiel ebenfalls plattenförmig ausgebildet. Dies muss aber nicht zwingend so sein. In der gezeigten Variante kann die Andrückvorrichtung 4 mittels der Gelenke 26 zwischen einer geöffneten Position gemäß Fig. 2 und einer geschlossenen Andrückposition, in der sie das Netz 1 an den Rahmen 2 andrückt, hin und her geschwenkt werden. Die Offenhaltevorrichtung 39, hier ausgeführt in Form einer teleskopierbaren Gasfeder, dient dazu, die Andrückvorrichtung 4 in der geöffneten Position gemäß Fig. 2 zu halten, während der Rahmen 2 in die Rahmenpositioniervorrichtung 3 eingelegt und das Netz 1 darüber gespannt wird bzw. wenn der entsprechenden Entnahmevorgang, wie weiter hinten geschildert, durchgeführt wird.

Im gezeigten Ausführungsbeispiel ist die Andrückvorrichtung 4 mittels der Gelenke 26 auf einem Absenkbalken 25 montiert, welcher sich in Fig. 2 in der mittels der Anhebfeder 28 angehobenen bzw. geöffneten Position befindet. Der Absenkbalken 25 ist vertikal verstellbar an den Führungsbolzen 27 gelagert und kann mittels der weiter unten noch geschilderten Spanneinrichtung 18 samt Andrückvorrichtung 4 unter Kompression der Anhebfeder 28 auf den Träger 19 abgesenkt werden, um die Andrückvorrichtung 4 gegen den in die Rahmenpositioniervorrichtung 3 eingelegten Rahmen 2 zu drücken. Im gezeigten Ausführungsbeispiel ist zusätzlich am, den Gelenken 26 gegenüberliegenden Bereich der Andrückvorrichtung 4 noch eine magnetische Verbindung 16 zum Verbinden der Andrückvorrichtung 4 mit dem Träger 19 und damit auch der Rahmenpositioniervorrichtung 3 vorgesehen. Diese magnetische Verbindung 16 ist jeweils zweiteilig ausgeführt. Ein Teil der jeweiligen magnetischen Verbindung 16 befindet sich im gezeigten Ausführungsbeispiel im bzw. am Träger 19. Das jeweilige Gegenstück ist, wie in Fig. 2 gut zu sehen, an der Andrückvorrichtung 4 befestigt. Beide Teile der magnetischen Verbindung 16 können Magnete, insbesondere Permanentmagnete oder Elektromagnete sein. Es reicht aber auch aus, wenn eines der Teile ein Magnet und das andere der Teile magnetisierbar ist.

Für die eigentliche Andrückfunktion der Andrückvorrichtung 4 weist diese im gezeigten Ausführungsbeispiel zwei Andrückleisten 8 und 9 auf. Mit diesen Andrückleisten 8 und 9 drückt die Andrückvorrichtung 4 in ihrer Andrückposition das Netz 1 an den in der Rahmenpositioniervorrichtung 3 angeordneten Rahmen 2 an. Zwischen den beiden Andrückleisten 8 und 9 befindet sich der Zwischenfreiraum 10 durch den hindurch die stoffschlüssige Befestigung, also insbesondere das Ankleben des Netzes 1 am Rahmen 2 erfolgt. Benachbart angeordnet und vom Zwischenfreiraum 10 mittels einer der Andrückleisten 9 getrennt, befindet sich ein seitlicher Freiraum 13 in der Andrückvorrichtung 4. In diesem seitlichen Freiraum 13 kann das Abtrennen der Reste 11 des Netzes 1 erfolgen, welche über den Rahmen 2 überstehen. Das stoffschlüssige Befestigen im Zwischenfreiraum 10 und das Abtrennen im seitlichen Freiraum 13 ist weiter unten noch im Detail erläutert. Die Andrückleisten 8, 9 können an ihren Ränder und/oder aber auch über, vorzugsweise gebogene, Zwischenbrücken bzw. -stege an der restlichen Andrückvorrichtung 4 befestigt sein.

Fig. 3 zeigt in einer Seitenansicht vergrößert den Bereich A aus Fig. 2. Zu sehen ist hier die Rahmenpositioniervorrichtung 3 und die Befestigungseinrichtung 15, deren obere Fläche vom erfindungsgemäßen Klettband 5 gebildet wird. Am Klettband 5 wird das Netz 1 im über den Rahmen 2 bzw. die Rahmenpositioniervorrichtung 3 gespannten Zustand befestigt. Wie besonders gut in Fig. 3 zu sehen, ist das Klettband 5 bevorzugt schräg abfallend angeordnet. Konkret fällt es von der zur Rahmenpositioniervorrichtung 3 gewandten Seite 6 zu seiner gegenüberliegenden Seite 7 schräg ab. Der Winkel 24 zwischen der vom Rahmen 2 bzw. der Rahmenpositioniervorrichtung 3 vorgegebenen Netzaufspannebene 40 und der Klettoberfläche des Klettbands 5, beträgt günstigerweise zwischen -15° und -45°. Durch die genannte Abschrägung wird eine besonders gute Befestigung des Netzes 1 am Klettband 5 sichergestellt.

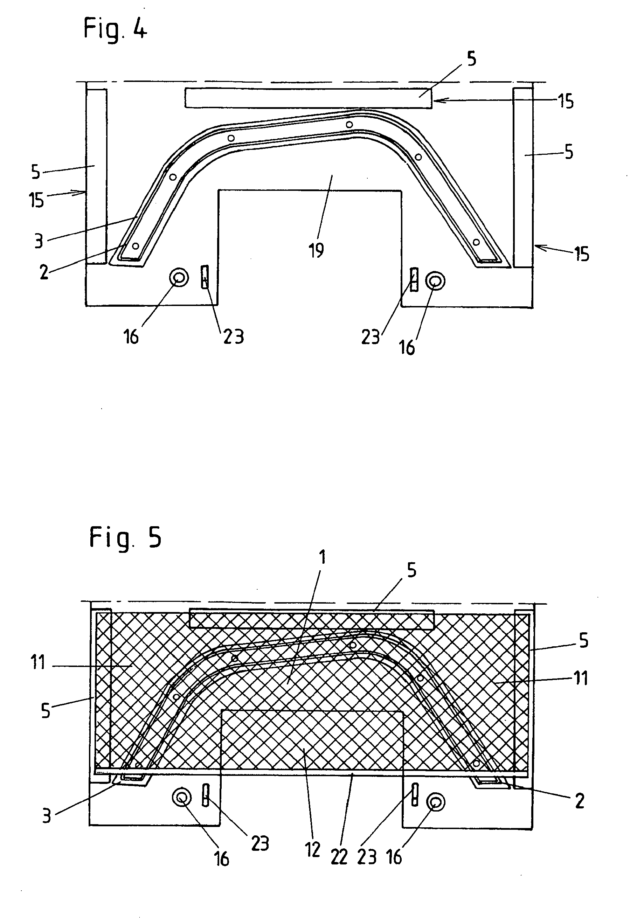

Fig. 4 zeigt in einer Draufsicht, wie zu Beginn des erfindungsgemäßen Verfahrens der Rahmen 2 in oder an der Rahmenpositioniervorrichtung 3 positioniert wird. Im gezeigten Ausführungsbeispiel wird der Rahmen 2 hierzu in entsprechende nutförmige bzw. kanalförmige Ausnehmungen der Rahmenpositioniervorrichtung 3 eingelegt. In Fig. 4 ist er bereits in die Rahmenpositioniervorrichtung 3 eingelegt.

Fig. 5 zeigt das Ergebnis des nächsten Verfahrensschrittes, bei dem das Netz 1 über den in oder an der Rahmenpositioniervorrichtung 3 positionierten Rahmen 2 gespannt und erfindungsgemäß an den Klettbändern 5 der Befestigungseinrichtung 15 befestigt wird. Hierzu reicht es aus, das Netz 1 einmal an das Klettband 5 anzudrücken. Mehr ist nicht nötig, um eine ausreichend feste Befestigung bzw. Aufspannung des Netzes 1 zu erreichen. Anschließend kann bei erfindungsgemäßen Vorrichtungen 14, wie der hier gezeigten, der Bund 22 des Netzes noch zusätzlich abgespannt werden.

Fig. 6 zeigt entsprechend wie der Bund 22 des Netzes 1 in die hier als Randspanneinrichtung verwendeten Klemmfedern 23 eingespannt wird. In Fig. 6 ist eine Zwischenstellung des Vorgangs dargestellt, mit dem die Andrückvorrichtung 4 im gezeigten Ausführungsbeispiel durch Verschwenken um seine Gelenke 26 in die Andrückposition gebracht wird. Natürlich muss die Andrückvorrichtung 4 nicht zwingend verschwenkbar gelagert sein. Ein Andrücken kann auch mittels einer Linearbewegung oder einer Überlagerung von Linear- und Schwenkbewegung erfolgen. Bevorzugte Varianten wie die hier gezeigte sehen jedoch vor, dass die Andrückvorrichtung 4 auf ihrem Weg in die Andrückposition zunächst mittels der Gelenke 26 in Richtung hin zur Rahmenpositioniervorrichtung 3 heruntergeschwenkt wird, bevor sie durch Absenken des Absenkbalkens 25 mittels der Spanneinrichtung 18 vollständig in die Andrückposition gebracht wird. Dieser Ablauf verhindert, dass die gegebenenfalls vorstehenden, vorzugsweise domartig ausgeformten, Befestigungsmittel 20 beim Absenken der Andrückvorrichtung 4 mit dieser kollidieren bzw. von dieser beschädigt werden. Aus demselben Grund ist es beim Öffnen, also beim Bewegen der Andrückvorrichtung 2 von ihrer Andrückposition in ihre geöffnete Position günstig, wenn zuerst der Absenkbalken 25, vorzugsweise mittels der Abhebfeder 28, von der Rahmenpositioniervorrichtung 3 abgehoben wird, bevor die Andrückvorrichtung 2 mittels der Gelenke 26 in die geöffnete Position geschwenkt wird.

Allgemein gesprochen ist es somit beim Schließen günstig, wenn die Andrückvorrichtung 4 auf ihrem Weg in ihre Andrückposition an der Rahmenpositioniervorrichtung 3 zunächst, vorzugsweise mittels zumindest eines Gelenks 26, in Richtung hin zur Rahmenpositioniervorrichtung 3 geschwenkt wird, bevor sie durch eine Linearbewegung, vorzugsweise eines mit der Andrückvorrichtung 4 verbundenen Absenkbalkens 25, vollständig, vorzugsweise mittels einer Spanneinrichtung 18, in die Andrückposition an der Rahmenpositioniervorrichtung 3 gebracht wird.

Beim Öffnen ist es allgemein gesprochen somit günstig, wenn die Andrückvorrichtung 2 bei ihrer Bewegung von ihrer Andrückposition an der Rahmenpositioniervorrichtung 3 in ihre geöffnete Position zuerst, vorzugsweise mittels einer Abhebfeder 28, mittels einer Linearbewegung, vorzugsweise eines mit der Andrückvorrichtung 4 verbundenen Absenkbalkens 25, von der Rahmenpositioniervorrichtung 3 abgehoben wird, bevor die Andrückvorrichtung 2, vorzugsweise mittels zumindest eines Gelenks 26, in die geöffnete Position geschwenkt wird.

Um dies mit der Vorrichtung 14 auch umsetzen zu können, ist es allgemein gesprochen somit günstig, wenn die Andrückvorrichtung 4 mittels zumindest eines Gelenks 26 schwenkbar an zumindest einem linear verschiebbaren Absenkbalken 25 gelagert ist.

Fig. 7 zeigt in einer Detailansicht die Befestigung des Netzes 1 mittels eines Bundes 22 durch Einklemmen zwischen Klemmfeder 23 und Träger 19. In Fig. 7 ist auch die optional vorhandene Verstellmöglichkeit zur Einstellung der Klemmkraft der Klemmfeder 23 bzw. zur Anpassung an verschiedene Stärken des Bundes 22 in Form der Stellschraube 41 gezeigt.

Alternativ zu der in Fig. 7 im Detail gezeigten Befestigung des Bundes 22 an der Klemmfeder 23 kann auch an dieser Stelle eine Befestigung des Netzes 1 mittels Klettband vorgesehen sein. Hierzu kann an der Stelle, an der in Fig. 7 der Bund 22 bzw. das Netz 1 an den Träger 19 gedrückt wird, ein entsprechendes Klettband 5 Randspanneinrichtung vorgesehen sein, welches den Bund 22 bzw. das Netz 1 dann in der angedrückten Stellung festhält. Ist ein solches Klettband 5 vorhanden, so kann die Klemmfeder 23 entfallen. Insbesondere die Varianten mit Klemmfeder(n) 23 und Klettband bzw. Klettbändern 5 haben den Vorteil, dass der Bund 22 parallel zum restlichen Netz 1 und zur stoffschlüssigen Verbindung zwischen Rahmen 2 und Netz 1 niedergedrückt wird.

Fig. 8 zeigt eine weitere Variante, wie das Netz 1 bzw. dessen Bund 22 schräg nach vorne unten gespannt werden kann. In der Variante gemäß Fig. 8 ist hierzu eine keilförmige Schrägfläche 29 vorgesehen, welche z.B. an der Andrückvorrichtung 4 befestigt sein kann. Beim Absenken der Andrückvorrichtung 4 kommt diese keilförmige Schrägfläche 29 dann in Kontakt mit dem Netz 1 bzw. dessen Bund 22, was zur Folge hat, dass im vollständig abgesenkten Zustand bzw. in der Andrückposition der Andrückvorrichtung 4 die keilförmige Schrägfläche 29 den Bund bzw. das Netz 1 ebenfalls nach schräg unten vorspannt.

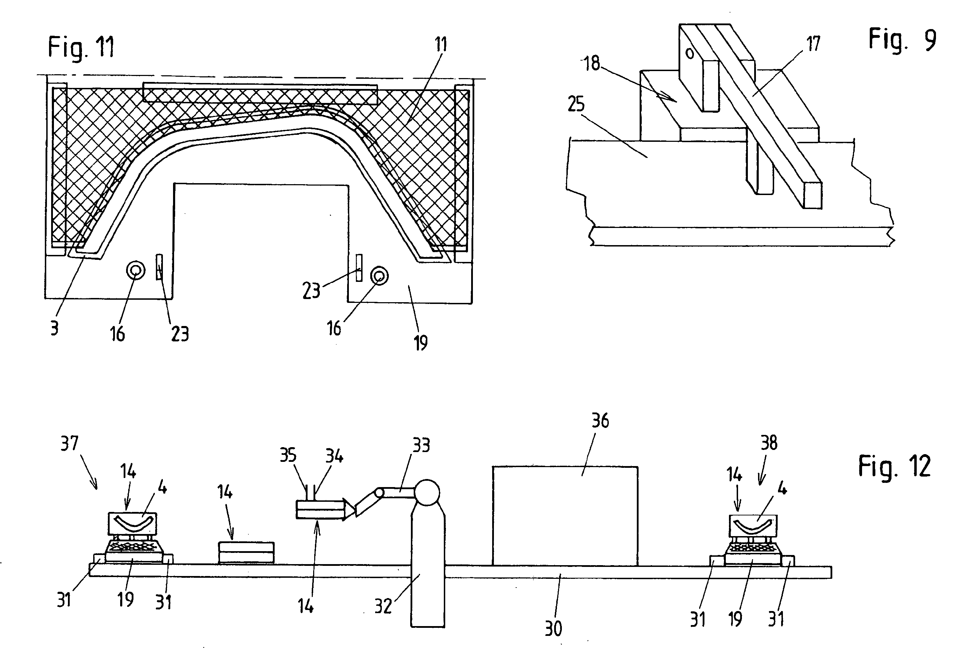

Im gezeigten Ausführungsbeispiel wird die Andrückvorrichtung 4 mittels der magnetischen Verbindung 16 im vorderen Bereich am Träger 19 befestigt. Im hinteren Bereich wird bei Betätigung des Spannhebels 17 der Absenkbalken 25 und damit die Andrückvorrichtung 4 mittels der Spanneinrichtung 18 entlang der Führungsbolzen 27 abgesenkt, wodurch die Andrückvorrichtung 4 in ihre endgültige Andrückposition gebracht wird, in der dann anschließend das stoffschlüssige Verbinden von Netz 1 und Rahmen 2 z.B. durch Einbringung einer entsprechenden Kleberaupe 21 und das Abtrennen der nicht benötigten Reste 11 des Netzes 1 erfolgen kann. Fig. 9 zeigt eine schematische Detailansicht auf eine mögliche Ausgestaltungsform der Spanneinrichtung 18, bei der der Absenkbalken 25 mittels des Spannhebels 17 nach unten gedrückt wird.

Fig. 10 zeigt einen Detailschnitt im Bereich der Rahmenpositioniervorrichtung 3, wobei die Andrückvorrichtung 4 vollständig in ihre Andrückposition abgesenkt ist. Zu sehen sind in Fig. 10 insbesondere die beiden Andrückleisten 8 und 9 der Andrückvorrichtung 4, sowie der Zwischenfreiraum 10 und der seitliche Freiraum 13. Wie besonders gut im Schnitt gemäß Fig. 10 zu sehen, drücken die beiden Andrückleisten 8 und 9 der Andrückvorrichtung 4 in der in Fig. 10 gezeigten Andrückposition das Netz 1 an den Rahmen 2, sodass im Zwischenfreiraum 10 zwischen diesen beiden Andrückleisten 8 und 9 die stoffschlüssige Verbindung z.B. durch Einbringung einer Kleberaupe 21 zwischen Netz 1 und Rahmen 2 erfolgen kann. Im mittels der Andrückleiste 9 vom Zwischenfreiraum 10 getrennten seitlichen Freiraum 13 kann das Abtrennen der nicht benötigten bzw. überstehenden Reste 11 des Netzes 1 erfolgen. Hierzu bieten sich thermische Trennverfahren an. Z.B. ist es denkbar, das Netz 1 im seitlichen Freiraum 13 mittels Laser abzuschneiden. Bei synthetischen Netzen 1 erfolgt beim thermischen Trennen gleichzeitig ein Verschweißen der durch die Abtrennung entstehenden Enden. Das Abtrennen der Reste 11 von dem Teil 12 des Netzes 1, welches am Rahmen 2 befestigt wird, kann bei geschlossener Andrückvorrichtung 4 auch bereits dann erfolgen, wenn die stoffschlüssige Verbindung zwischen Netz 1 und Rahmen 2 noch nicht vollständig ausgehärtet ist, solange die Andrückleisten 8 und 9 das Netz 1 an den Rahmen 2 drücken.

In Fig. 11 ist nach erfolgtem stoffschlüssigen Verbinden des Netzes 1 mit dem Rahmen 2 und nach dem Abtrennen des Restes 11 die Andrückvorrichtung 4 wieder geöffnet bzw. angehoben worden. Der Rahmen 2 ist zusammen mit dem an ihm stoffschlüssig befestigten Teil 12 des Netzes 1 entnommen worden. Der zunächst am Klettband 5 noch anhaftende Rest 11 des Netzes 1 kann anschließend entfernt werden, sodass die Vorrichtung 14 dann wieder für eine neuerliche Wiederholung des Verfahrens zur Verfügung steht.

Grundsätzlich ist es möglich, dass die Vorrichtung 14 während des gesamten Verfahrens ortsfest bleibt und die stoffschlüssige Verbindung zwischen Netz 1 und Rahmen 2 durch Abfahren des Zwischenfreiraums 10 mit einer Klebepistole, einem Schweißgerät oder dergleichen erfolgt. Auch das Abtrennen der Reste 11 im seitlichen Freiraum 13 kann bei stationär verbleibender Vorrichtung 14 mittels geeigneter, beim Stand der Technik an sich bekannter Hilfsmittel erfolgen.

Fig. 12 zeigt schematisiert als Alternative dazu, einen teilautomatisierten Ablauf, welcher sich insbesondere dann anbietet, wenn die Netze 1 in größeren Stückzahlen an den Rahmen 2 befestigt werden sollen.

Bei der in Fig. 12 schematisiert dargestellten Produktionsstraße ist zunächst eine Einbaustation 37 vorgesehen, bei der der Rahmen 2 bei geöffneter Andrückvorrichtung 4 in die Rahmenpositioniervorrichtung 3 eingelegt und das Netz 1 erfindungsgemäß am Klettband 5 befestigt wird. In dieser Einbaustation wird günstigerweise auch die Andrückvorrichtung 4 mittels der Spanneinrichtung 18 in die Andrückstellung gebracht. Während dieses Vorgangs wird die gesamte Vorrichtung 14 in der in Fig. 12 gezeigten Einbaustation 37 mittels z.B. in Form von anhebbar und absenkbar gelagerten Bolzen ausgeführten Fixierungen 31 in ihrer Position gehalten. Sind die Arbeiten in der Einbaustation 37 abgeschlossen, so kann die Vorrichtung 14 entlang einer z.B. als Kugel- oder Rollenbahn ausgeführten Transportbahn 30 zu einem Roboter 32 transportiert werden. Der Roboter 32 greift dann mit seinem Roboterarm 33 die Vorrichtung 14 und führt diese einer Klebeeinrichtung 34 und einem Laserschneidwerkzeug 35 zu. Bei der Klebeeinrichtung 34 kann es sich z.B. um eine stationäre Heißklebepistole handeln. Geeignete Laser für das Laserschneidwerkzeug 35 sind ebenfalls bekannt und können in der hier gezeigten Variante ebenfalls stationär angeordnet sein. Durch entsprechende Bewegung des Roboterarms 33 werden der Zwischenfreiraum 10 und der seitliche Freiraum 13 so entlang der Klebeeinrichtung 34 und des Laserschneidwerkzeugs 35 verfahren, dass im Zwischenfreiraum 10 die gewünschte stoffschlüssige Verbindung und im seitlichen Freiraum 13 das Abtrennen des Restes 11 erfolgt. Dies kann gleichzeitig an Klebeeinrichtung 34 und Laserschneidwerkzeug 35 oder nacheinander an voneinander getrennten Klebe- und Schneidwerkzeugen passieren. Natürlich ist es alternativ zu der dargestellten Variante auch denkbar, dass die Klebeeinrichtung 34 und das Laserschneidwerkzeug 35 entlang des Zwischenfreiraums 10 bzw. des seitlichen Freiraums 13 bewegt werden und die Vorrichtung 14 derweil stationär ruht. Nach erfolgter stoffschlüssiger Verbindung und Abtrennung des Restes 11 kann dann ein Weitertransport der Vorrichtung 14 mittels Transportbahn 30 zu einem Kühltunnel 36 erfolgen, um dort mittels Kühlung die stoffschlüssige Verbindung zwischen Netz 1 und Rahmen 2 vollständig oder zumindest so weit wie notwendig auszuhärten. Anschließend kann ein Weitertransport mittels Transportbahn 30 zu einer Entnahmestation 38 erfolgen, bei der die Andrückvorrichtung 4 von der Rahmenpositioniervorrichtung 3 bzw. vom Träger 19 abgehoben bzw. in die geöffnete Stellung gebracht wird, um dort den Rahmen 2 mit dem fertig befestigten Teil 12 des Netzes 1 zu entnehmen und die Reste 11 des Netzes 1 zu entfernen. Auch an der Entnahmestation 38 kann vorgesehen sein, dass die Vorrichtung 14 mittels entsprechender Fixierungen 31, wie z.B. bewegbaren Anschlägen oder Bolzen in ihrer Position festgehalten wird.

### Legende zu den Hinweisziffern:

- 1: Netz
- 2: Rahmen
- 3: Rahmenpositioniervorrichtung
- 4: Andrückvorrichtung
- 5: Klettband
- 6: zugewandte Seite
- 7: gegenüberliegende Seite
- 8: Andrückleiste
- 9: Andrückleiste
- 10: Zwischenfreiraum
- 11: Rest
- 12: Teil
- 13: seitlicher Freiraum
- 14: Vorrichtung
- 15: Befestigungseinrichtung
- 16: magnetische Verbindung
- 17: Spannhebel
- 18: Spanneinrichtung
- 19: Träger
- 20: Befestigungsmittel
- 21: Kleberaupe
- 22: Bund
- 23: Klemmfeder
- 24: Winkel
- 25: Absenkbalken
- 26: Gelenk
- 27: Führungsbolzen
- 28: Abhebfeder
- 29: Keil
- 30: Transportbahn
- 31: Fixierung
- 32: Roboter
- 33: Roboterarm
- 34: Klebeeinrichtung
- 35: Laserschneidwerkzeug
- 36: Kühltunnel
- 37: Einbaustation
- 38: Entnahmestation
- 39: Offenhaltevorrichtung
- 40: Netzaufspannebene
- 41: Stellschraube

## Patentansprüche

1. Verfahren zur stoffschlüssigen Befestigung, insbesondere zum Ankleben, eines textilen Flächengebildes, insbesondere eines Netzes (1), an einem Rahmen (2), wobei der Rahmen (2) in oder an einer Rahmenpositioniervorrichtung (3) positioniert wird und anschließend das textile Flächengebilde über den in oder an der Rahmenpositioniervorrichtung (3) positionierten Rahmen (2) gespannt wird und anschließend das textile Flächengebilde mittels einer Andrückvorrichtung (4) zumindest bereichsweise an den Rahmen (2) angedrückt und anschließend das textile Flächengebilde am Rahmen (2) stoffschlüssig befestigt, insbesondere angeklebt, wird, **dadurch gekennzeichnet, dass** das textile Flächengebilde beim über den Rahmen (2) Spannen an zumindest einem Klettband (5) befestigt wird.

2. Verfahren nach Anspruch 1, **dadurch gekennzeichnet, dass** das textile Flächengebilde während des Andrückens mittels der Andrückvorrichtung (4) an den Rahmen (2) und während des stoffschlüssigen Befestigens am Rahmen (2) an dem Klettband (5) bzw. den Klettbändern (5) befestigt bleibt.

3. Verfahren nach Anspruch 1 oder 2, **dadurch gekennzeichnet, dass** das Klettband (5) bzw. die Klettbänder (5) zumindest bereichsweise um die Rahmenpositioniervorrichtung (3) herum angeordnet und/oder von ihrer zur Rahmenpositioniervorrichtung (3) gewandten Seite (6) zu ihrer dazu gegenüberliegenden Seite (7) schräg abfallend angeordnet sind.

4. Verfahren nach einem der Ansprüche 1 bis 3, **dadurch gekennzeichnet, dass** die Andrückvorrichtung (4) zumindest zwei voneinander beabstandete Andrückleisten (8, 9) aufweist und das textile Flächengebilde mittels der Andrückleisten (8, 9) an den Rahmen (2) angedrückt wird und die stoffschlüssige Befestigung, vorzugsweise das Ankleben, des textilen Flächengebildes am Rahmen (2) in einem Zwischenfreiraum (10) zwischen den Andrückleisten (8, 9) durchgeführt wird.

5. Verfahren nach Anspruch 4, **dadurch gekennzeichnet, dass** ein, vorzugsweise thermisches, Abtrennen, vorzugsweise mittels Laserstrahl, von überstehenden Resten (11) des textilen Flächengebildes vom, am Rahmen (2) befestigten oder zu befestigenden Teil (12) des textilen Flächengebildes in einem seitlichen Freiraum (13) in der Andrückvorrichtung (4) neben einer der Andrückleisten (8, 9) durchgeführt wird, wobei der seitliche Freiraum (13) zumindest durch diese Andrückleiste (8, 9) vom Zwischenfreiraum (10) getrennt ist.

6. Verfahren nach einem der Ansprüche 1 bis 5, **dadurch gekennzeichnet, dass** die Andrückvorrichtung (4) auf ihrem Weg in ihre Andrückposition an der Rahmenpositioniervorrichtung (3) zunächst, vorzugsweise mittels zumindest eines Gelenks (26), in Richtung hin zur Rahmenpositioniervorrichtung (3) geschwenkt wird, bevor sie durch eine Linearbewegung, vorzugsweise eines mit der Andrückvorrichtung (4) verbundenen Absenkbalkens (25), vollständig, vorzugsweise mittels einer Spanneinrichtung (18), in die Andrückposition an der Rahmenpositioniervorrichtung (3) gebracht wird.

7. Verfahren nach einem der Ansprüche 1 bis 6, **dadurch gekennzeichnet, dass** die Andrückvorrichtung (2) bei ihrer Bewegung von ihrer Andrückposition an der Rahmenpositioniervorrichtung (3) in ihre geöffnete Position zuerst, vorzugsweise mittels einer Abhebfeder (28), mittels einer Linearbewegung, vorzugsweise eines mit der Andrückvorrichtung (4) verbundenen Absenkbalkens (25), von der Rahmenpositioniervorrichtung (3) abgehoben wird, bevor die Andrückvorrichtung (2), vorzugsweise mittels zumindest eines Gelenks (26), in die geöffnete Position geschwenkt wird.

8. Vorrichtung (14) zur stoffschlüssigen Befestigung, insbesondere zum Ankleben, eines textilen Flächengebildes, insbesondere eines Netzes (1), an einem Rahmen (2), insbesondere mit einem Verfahren nach einem der Ansprüche 1 bis 7, wobei die Vorrichtung (14) zumindest eine Rahmenpositioniervorrichtung (3) zur Positionierung des Rahmens (2) und zumindest eine Befestigungseinrichtung (15) zum Befestigen des textilen Flächengebildes im gespannten Zustand über dem, in oder an der Rahmenpositioniervorrichtung (3) positionierten Rahmen (2) und zumindest eine Andrückvorrichtung (4) zum Andrücken des textilen Flächengebildes an den Rahmen (2) während des stoffschlüssigen Verbindens, vorzugsweise Anklebens, des textilen Flächengebildes am Rahmen (2) aufweist, **dadurch gekennzeichnet, dass** die Befestigungseinrichtung (15) zumindest ein Klettband (5) zum Befestigen des textilen Flächengebildes im über den Rahmen (2) gespannten Zustand aufweist.

9. Vorrichtung (14) nach Anspruch 8, **dadurch gekennzeichnet, dass** das Klettband (5) bzw. die Klettbänder (5) der Befestigungseinrichtung (15) zumindest bereichsweise um die Rahmenpositioniervorrichtung (3) herum und/oder von der Rahmenpositioniervorrichtung (3) beabstandet angeordnet und/oder von ihrer zur Rahmenpositioniervorrichtung (3) gewandten Seite (6) zu ihrer dazu gegenüberliegenden Seite (7) schräg abfallend angeordnet sind.

10. Vorrichtung (14) nach Anspruch 8 oder 9, **dadurch gekennzeichnet, dass** die Andrückvorrichtung (4) zumindest zwei voneinander beabstandete Andrückleisten (8, 9) zum Andrücken des textilen Flächengebildes an den Rahmen (2) aufweist und zwischen den Andrückleisten (8, 9) ein Zwischenfreiraum (10) zur stoffschlüssigen Befestigung, vorzugsweise zum Ankleben, des textilen Flächengebildes am Rahmen (2) angeordnet ist.

11. Vorrichtung (14) nach Anspruch 10, **dadurch gekennzeichnet, dass** die Andrückvorrichtung (4) zumindest einen, in der Andrückvorrichtung (4) angeordneten, seitlichen Freiraum (13) zum thermischen Abtrennen, vorzugsweise mittels Laserbestrahlung, von überstehenden Resten (11) des textilen Flächengebildes vom, am Rahmen (2) befestigen oder zu befestigenden Teil (12) des textilen Flächengebildes aufweist, wobei der seitliche Freiraum (13) neben einer der Andrückleisten (8, 9) angeordnet und zumindest durch diese Andrückleiste (8, 9) vom Zwischenfreiraum (10) getrennt ist.

12. Vorrichtung (14) nach einem der Ansprüche 8 bis 11, **dadurch gekennzeichnet**, das die Andrückvorrichtung (4) mittels zumindest eines Gelenks (26) schwenkbar an zumindest einem linear verschiebbaren Absenkbalken (25) gelagert ist.

13. Vorrichtung (14) nach einem der Ansprüche 8 bis 12, **dadurch gekennzeichnet, dass** die Andrückvorrichtung (4) eine magnetische Verbindung (16) und/oder eine, vorzugsweise mittels Spannhebel (17) von Hand betätigbare, Spanneinrichtung (18) zum Andrücken und/oder Befestigen der Andrückvorrichtung (4) an der Rahmenpositioniervorrichtung (3) oder einem, die Rahmenpositioniervorrichtung (3) tragenden Träger (19) aufweist.

## Claims

1. Method of fixing, by bonding or coalescence and in particular by adhesive bonding, a textile fabric and in particular a net (1) to a frame (2), the frame (2) being positioned in or on a frame-positioning device (3) and the textile fabric then being tensioned over the frame (2) positioned in or on the frame-positioning device (3) and at least a region or regions of the textile fabric then being pressed against the frame (2) by means of a pressure-applying device (4) and the textile fabric then being fixed to the frame (2) by bonding or coalescence and in particular by being adhesive bonded thereto, **characterised in that** the textile fabric, when being tensioned over the frame (2), is fixed to at least one strip (5) of hook and loop fastener.

2. Method according to claim 1, **characterised in that** the textile fabric remains fixed to the strip (5) or strips (5) of hook and loop fastener while it is being pressed against the frame (2) by means of the pressure-applying device (4) and while it is being fixed to the frame (2) by bonding or coalescence.

3. Method according to claim 1 or 2, **characterised in that** at least a region or regions of the strip (5) or strips (5) of hook and loop fastener are arranged around the frame-positioning device (3) and/or are arranged to slope down at an oblique angle from their side (6) adjacent the frame-positioning device (3) to their side (7) opposite therefrom.

4. Method according to one of claims 1 to 3, **characterised in that** the pressure-applying device (4) has at least two pressure-applying strips (8, 9) which are spaced apart from one another and the textile fabric is pressed against the frame (2) by means of the pressure applying strips (8, 9) and the fixing, by bonding or coalescence and preferably by adhesive bonding, of the textile fabric to the frame (2) is performed in an intervening gap (10) between the pressure-applying strips (8, 9).

5. Method according to claim 4, **characterised in that** cutting-off, preferably thermal and preferably by laser beam, of projecting remains (11) of the textile fabric from the part (12) of the textile fabric which has been or is to be fixed to the frame (2) is performed in a lateral gap (13), next to one of the pressure-applying strips (8, 9), in the pressure-applying device (4), this lateral gap (13) being separated from the intervening gap (10) at least by the pressure-applying strip (8, 9) concerned.

6. Method according to one of claims 1 to 5, **characterised in that**, on its way to its pressure-applying position against the frame-positioning device (3), the pressure-applying device (4) is first pivoted in the direction of the frame-positioning device (3), preferably by means of at least one joint (26), before it is brought into the pressure-applying position against the frame-positioning device (3) by a linear movement, preferably of a lowering bar (25) connected to the pressure-applying device (4), being so brought fully preferably by means of a clamping means (18).

7. Method according to one of claims 1 to 6, **characterised in that**, as it moves from its pressure-applying position against the frame-positioning device (3) to its open position, the pressure-applying device (2) is first lifted away from the frame-positioning device (3), preferably by means of a lifting-away spring (28), by means of a linear movement preferably of a lowering bar (25) connected to the pressure-applying device (4), before the pressure-applying device (2) is pivoted to the open position, preferably by means of at least one joint (26).

8. Apparatus (14) for fixing, by bonding or coalescence and in particular by adhesive bonding, a textile fabric and in particular a net (1) to a frame (2), in particular by a method according to one of claims 1 to 7, the apparatus (14) having at least one frame-positioning device (3) for positioning the frame (2) and at least one fixing means (15) for fixing the textile fabric, in the tensioned state, over the frame (2) positioned in or on the frame-positioning device (3), and having at least one pressure-applying device (4) for pressing the textile fabric against the frame (2) during the connection by bonding or coalescence and preferably by adhesive bonding of the textile fabric to the frame (2), **characterised in that** the fixing means (15) has at least one strip (5) of hook and loop fastener to fix the textile fabric in place in the state where it is tensioned over the frame (2).

9. Apparatus (14) according to claim 8, **characterised in that** at least a region or regions of the strip (5) or strips (5) of hook and loop fastener are arranged around the frame-positioning device (3) and/or at a spacing from the frame-positioning device (3) and/or are arranged to slope down at an oblique angle from their side (6) adjacent the frame-positioning device (3) to their side (7) opposite therefrom.

10. Apparatus (14) according to claim 8 or 9, **characterised in that** the pressure-applying device (4) has at least two pressure-applying strips (8, 9) which are spaced apart from one another for pressing the textile fabric against the frame (2), and an intervening gap (10), for the fixing by bonding or coalescence and preferably by adhesive bonding, of the textile fabric to the frame (2) is arranged between the pressure-applying strips (8, 9).

11. Apparatus (14) according to claim 10, **characterised in that** the pressure-applying device (4) has at least one lateral gap (13), arranged in the pressure-applying device (4), for the thermal cutting-off, preferably by laser beam, of projecting remains (11) of the textile fabric from the part (12) of the textile fabric which has been or is to be fixed to the frame (2), the lateral gap (13) being arranged next to one of the pressure-applying strips (8, 9) and being separated from the intervening gap (10) at least by this pressure-applying strip (8, 9).

12. Apparatus (14) according to one of claims 8 to 11, **characterised in that** the pressure-applying device (4) is pivotably mounted on at least one linearly displaceable lowering bar (25) by means of at least one joint (26).

13. Apparatus (14) according to one of claims 8 to 12, **characterised in that** the pressure-applying device (4) has a magnetic connection (16) and/or a clamping means (18), which latter is preferably able to be actuated manually by means of a clamping lever (17), for pressing the pressure-applying device (4) against the frame-positioning device (3) and/or fixing it thereto, or for pressing or fixing it against or to a support (19) carrying the frame-positioning device (3).

## Revendications

1. Procédé de fixation par adhésion de matière, en particulier de collage, d'une structure textile plate, en particulier d'un filet (1) sur un cadre (2), ledit cadre (2) étant mis en place dans ou sur un dispositif de positionnement de cadre (3), la structure textile plate étant ensuite tendue sur le cadre (2) mis en place dans ou sur le dispositif de positionnement de cadre (3), la structure textile plate étant ensuite au moins partiellement serrée contre le cadre (2) au moyen d'un dispositif de serrage (4) et la structure textile plate étant ensuite fixée par adhésion de matière, en particulier collée sur le cadre (2), **caractérisé en ce que** la structure textile plate est fixée sur au moins une bande auto-agrippante (5) lorsqu'elle est tendue sur le cadre (2).

2. Procédé selon la revendication 1, **caractérisé en ce que** la structure textile plate reste fixée sur la bande auto-agrippante (5) ou sur les bandes auto-agrippantes (5) pendant le serrage contre le cadre (2) au moyen du dispositif de serrage (4) et pendant la fixation par adhésion de matière sur le cadre (2).

3. Procédé selon la revendication 1 ou 2, **caractérisé en ce que** la bande auto-agrippante (5) ou les bandes auto-agrippantes (5) sont disposées au moins partiellement tout autour du dispositif de positionnement de cadre (3) et/ou en pente oblique entre leur côté (6) contigu au dispositif de positionnement de cadre (3) et leur côté (7) opposé au précédent.

4. Procédé selon l'une des revendications 1 à 3, **caractérisé en ce que** le dispositif de serrage (4) comporte au moins deux barrettes de serrage (8, 9) espacées l'une de l'autre, **en ce que** la structure textile plate est serrée contre le cadre (2) au moyen des barrettes de serrage (8, 9) et **en ce que** la fixation par adhésion de matière, préférentiellement le collage, de la structure textile plate sur le cadre (2) est effectuée dans un interstice libre (10) entre les barrettes de serrage (8, 9).

5. Procédé selon la revendication 4, **caractérisé en ce qu'**une séparation, préférentiellement thermique, de restes (11) saillants de la structure textile plate est effectuée préférentiellement au moyen d'un rayon laser, de la partie (12) de la structure textile plate fixée ou à fixer sur le cadre (2) dans un dégagement latéral (13) dans le dispositif de serrage (4) à côté d'une des barrettes de serrage (8, 9), le dégagement latéral (13) étant séparé de l'interstice libre (10) au moins par cette barrette de serrage (8, 9).

6. Procédé selon l'une des revendications 1 à 5, **caractérisé en ce que**, dans sa course vers sa position de serrage sur le dispositif de positionnement de cadre (3), le dispositif de serrage (4) est d'abord pivoté dans la direction du dispositif de positionnement de cadre (3), préférentiellement au moyen d'au moins une articulation (26), avant d'être complètement amené en position de serrage sur le dispositif de positionnement de cadre (3) par un mouvement linéaire, préférentiellement d'une barre descendante (25) raccordée au dispositif de serrage (4), préférentiellement au moyen d'un dispositif de serrage (18).

7. Procédé selon l'une des revendications 1 à 6, **caractérisé en ce que**, lors de son déplacement de sa position de serrage sur le dispositif de positionnement de cadre (3) vers sa position d 'ouverture, le dispositif de serrage (2) est d'abord soulevé du dispositif de positionnement de cadre (3), préférentiellement au moyen d'un ressort de soulèvement (28), par un mouvement linéaire, préférentiellement d'une barre descendante (25) raccordée au dispositif de serrage (4), avant que le dispositif de serrage (2) soit pivoté vers la position d'ouverture, préférentiellement au moyen d'au moins une articulation (26).

8. Installation (14) pour la fixation par adhésion de matière, en particulier pour le collage, d'une structure textile plate, en particulier d'un filet (1) sur un cadre (2), en particulier au moyen d'un procédé selon l'une des revendications 1 à 7, ladite installation (14) comportant au moins un dispositif de positionnement de cadre (3) pour la mise en place du cadre (2) et au moins un dispositif de fixation (15) pour la fixation de la structure textile plate en état de tension sur le cadre (2) mis en place dans ou sur le dispositif de positionnement de cadre (3), et au moins un dispositif de serrage (4) pour le serrage de la structure textile plate contre le cadre (2) pendant la fixation par adhésion de matière, préférentiellement le collage, de la structure textile plate sur le cadre (2), **caractérisée en ce que** le dispositif de fixation (15) comporte au moins une bande auto-agrippante (5) pour la fixation de la structure textile plate en état de tension sur le cadre (2).

9. Installation (14) selon la revendication 8, **caractérisée en ce que** la bande auto-agrippante (5) ou les bandes auto-agrippantes (5) du dispositif de fixation (15) sont disposées au moins partiellement tout autour du dispositif de positionnement de cadre (3) et/ou à intervalle du dispositif de positionnement de cadre (3) et/ou en pente oblique entre leur côté (6) contigu au dispositif de positionnement de cadre (3) et leur côté (7) opposé au précédent.

10. Installation (14) selon la revendication 8 ou 9, **caractérisée en ce que** le dispositif de serrage (4) comporte au moins deux barrettes de serrage (8, 9) espacées l'une de l'autre pour le serrage de la structure textile plate contre le cadre (2), et **en ce qu'**un interstice libre (10) est présenté entre les barrettes de serrage (8, 9) pour la fixation par adhésion de matière, préférentiellement le collage, de la structure textile plate sur le cadre (2).

11. Installation (14) selon la revendication 10, **caractérisée en ce que** le dispositif de serrage (4) présente au moins un dégagement latéral (13) ménagé dans le dispositif de serrage (4) pour la séparation thermique, préférentiellement par rayonnement laser, de restes (11) saillants de la structure textile plate, de la partie (12) de la structure textile plate fixée ou à fixer sur le cadre (2), le dégagement latéral (13) étant ménagé à côté d'une des barrettes de serrage (8, 9) et étant séparé de l'interstice libre (10) au moins par cette barrette de serrage (8, 9).

12. Installation (14) selon l'une des revendications 8 à 11, **caractérisée en ce que** le dispositif de serrage (4) est monté de manière à pouvoir pivoter sur au moins une barre descendante (25) déplaçable linéairement au moyen d'au moins une articulation (26).

13. Installation (14) selon l'une des revendications 8 à 12, **caractérisée en ce que** le dispositif de serrage (4) comporte une liaison magnétique (16) et/ou un dispositif de serrage (18), préférentiellement actionnable manuellement au moyen d'un levier de serrage (17), pour le serrage et/ou la fixation du dispositif de serrage (4) sur le dispositif de positionnement de cadre (3) ou sur un support (19) supportant le dispositif de positionnement de cadre (3).
